# EUROPEAN PATENT APPLICATION

(11) **EP 2 852 175 A1**
(43) Date of publication of application: **25.03.2015**
(21) Application number: 14733956.8
(22) Date of filing: 20.03.2014
(51) Int. Cl.: H04Q 9/00

(54) **DEVICE CONTROL METHOD**

(30) Priority: 26.07.2013 KR 20130088616
(71) Applicant: Kim, Jong-Yong, Suwon, Gyeonggi-do 440-330 (KR); MTEK C&K CO.,LTD., Dohwal-dong Nam-gu Incheon 402-711 (KR)
(72) Inventor: KIM, Jong-Yong, Suwon Gyeonggi-do 440-330 (KR)
(74) Representative: Petraz, Gilberto Luigi
(86) International application number: PCT/KR2014/002340
(87) International publication number: WO 2015/012469

(57) **Abstract**

Disclosed is a device control method which makes it possible to more easily control a variety of devices in such a way to combine a variety of control commands provided to control the functions of each device for thereby controlling such devices. The device control method configured to control a main device and one or a plurality of auxiliary devices connected to the main device by way of a wired or wireless communication, comprises preparing a command assembly unit in the main device in such a way to combine a plurality of control commands used to control the functions that the main device or auxiliary device perform; and
controlling the main device or the auxiliary device by way of the command assembly unit.

## Description

### TECHNICAL FIELD

The present invention relates to a device control method, and in particular to a device control method which makes it possible to more easily control a variety of devices in such a way to combine a variety of control commands provided to control the functions of each device for thereby controlling such devices.

### BACKGROUND ART

A remote control device (remote controller) is a device configured to control a variety of electronics by way of a wireless transmission of a control frequency from a remote area, including a television, a digital versatile disc (DVD), a videocassette recorder (VCR), a cable broadcast, a settop box (hereinafter referred to "STB"), an audio system and other remotely controllable devices. When emitting infrared ray signals, each remote controller is configured to emit an infrared ray signal in accordance with control codes which are differently defined for electronics of each manufacturer so as to differentiate the electronics of other manufacturers.

In case that a home uses a variety of electronics, there should be provided multiple remote controllers for each electronic device, which makes it hard to manage multiple remote controllers. In case that a user wants to use a predetermined electronic device, the user should change the remote controller, which causes inconveniences.

In order to improve the above-mentioned problems, a new universal remote controller is developed and configured to control a variety of electronics in one remote controller.

Since the universal remote controller is used, it does not need to control electronics using an exclusive remote controller when controlling a variety of electronics. A variety of electronics may be controlled using only one remote controller.

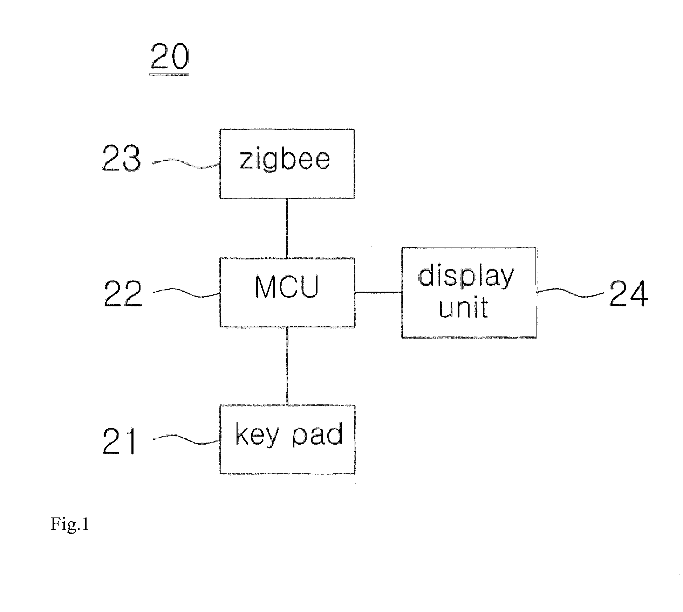

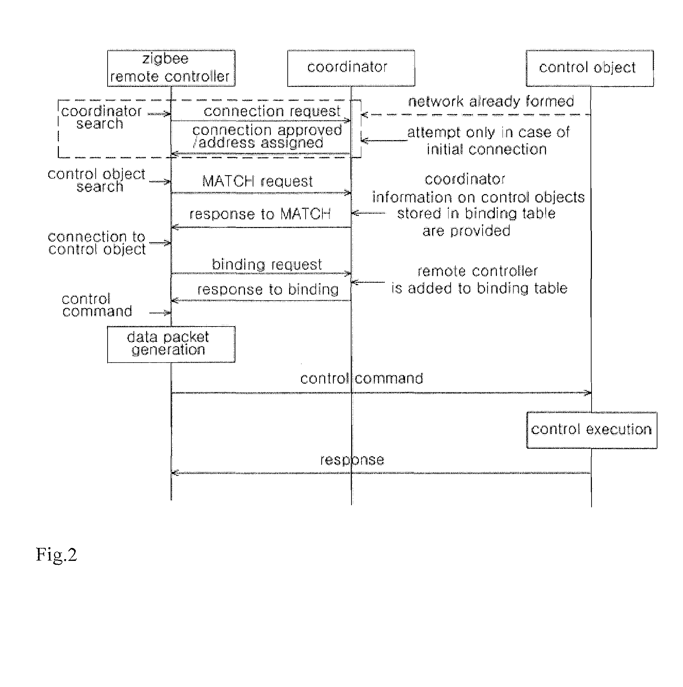

As illustrated in Figures 1 and 2, as an example of the universal remote controller, there is the Korean patent registration number 10-0693224. In a construction which comprises an electronic device having a zigbee coordinator, and a zigbee network connected to electronics on which a zigbee module is mounted, there are provided a key pad 21 for operations, a zigbee module 23 configured to communicate with the zigbee coordinator in accordance with a zigbee communication protocol and communicate with the zigbee module and transmit a control command to the side of the electronic device and receives a result of the operation, a display unit 24 configured to display operation states, and a control unit 22 configured to communicate with the zigbee coordinator by way of the zigbee module 23 and receive and store a biding table and transmit a control command by way of the zigbee module 23 with respect to a selected control object in accordance with the operations of the keypad 21.

According to the Korean patent registration number 10-0693224, it is possible to control a variety of electronics using one remote controller; however a user should directly input a command corresponding a desired operation by pushing a predetermined button and sending a signal whenever each operation is performed so as to control the operations of each electronic device. In this case, the user should directly transmit control signals multiple times so as to perform multiple operations, which causes inconveniences.

The conventional remote controller is configured to simply perform each function, more specifically, there is not any function of specifically controlling the operations in such a way to combine functions for a special purpose.

### [Prior Art Documents]

### [Patent Documents]

Korean Patent Registration Number 10-0342350
Korean Patent Registration Number 10-0693224

### DISCLOSURE OF THE INVENTION

The present invention is made in an effort to resolve the above mentioned problems.

Accordingly, it is an object of the present invention to provide a device control method which is characterized in that there are provided a main device such as a smart phone or an ipad, and one or a plurality of auxiliary devices connected to the main device by way of a wired or wireless communication. In the main device, there is a command assembly unit prepared by combining control commands which are used to control the functions that the main device or the auxiliary device perform, so a variety of devices may be easily controlled by controlling the main device or the auxiliary device by way of the command assembly unit.

It is anther object of the present invention to provide a device control method which is characterized in that a command assembly unit provided in a main device combines the functions that a main device or an auxiliary device performs. The command assembly unit is configured to control a special purpose in such a way to control the sequence of each function, for example, to control the operations of a plurality of smart pads or toys using a command assembly unit which includes an application or a program corresponding to the smart device. The above mentioned application or program may contain a common story or may describe a variety of circumferences, more specifically, may describe an actual circumference showing a kid crossing a crosswalk for thereby showing the kids actual situations. Education effects may be enhanced by causing a plurality of kids to have interests in studies, educations, edutainment or game fields.

It is further another object of the present invention to provide a device control method which is characterized in that when controlling each auxiliary device or main device, the main device may transmit a control command to each auxiliary device or main device. The command assembly unit is provided in the main device as well as the auxiliary unit, so the control command may be transmitted from the auxiliary device or main device which has performed the current control command to the device which will receive the next control command, thus more easily controlling each device.

To achieve the above objects, there is provided a device control method configured to control a main device and one or a plurality of auxiliary devices connected to the main device by way of a wired or wireless communication, comprising preparing a command assembly unit in the main device in such a way to combine a plurality of control commands used to control the functions that the main device or auxiliary device perform; and controlling the main device or the auxiliary device by way of the command assembly unit.

Here, the control command contains an identification code for distinguishing the main device or the auxiliary device.

In addition, the control command contains a function code for distinguishing the functions that the main device or the auxiliary device may perform.

Also, the function of the main device or the auxiliary device which may be performed in accordance with the control command contains a function of a program or an application installed in the main device or the auxiliary device.

Meanwhile, the control command further contains a proceeding time of the functions.

In addition, the function defined in the function code contains a combined function which has combined the functions that the main device or one auxiliary device may perform.

Also, the main device or the auxiliary device is characterized in that during the execution of the function of the control command, when there is a user's selection or input, the control command to be executed next is specified in accordance with the selection that the user inputs or the user's input.

Meanwhile, when controlling the main device or the auxiliary device by way of the command assembly unit, the main device directly transmits by way of a wired or wireless communication a control command to the auxiliary device in case that the device supposed to execute the control command is an auxiliary device, and in case that the device supposed to execute the control command is the main device, the main device directly executes a corresponding control command.

In addition, the auxiliary device further comprises a command assembly unit.

At this time, when controlling the main device or the auxiliary device by way of the command assembly unit, the main device or the auxiliary device transmits by way of a wired or wireless communication a control command to the main device or the auxiliary device which is supposed to execute the next control command in the command assembly unit provided inside, after a corresponding control command is executed.

Also, the command assembly unit is configured to arrange a story using at least one among a plurality of motion pictures, sound, program and a function of a main device or an auxiliary device and is configured to combine in order the control commands used to perform each motion picture, sound or program.

Here, a motion picture, sound and program used to execute the control commands of the command assembly unit are stored in the main device and the auxiliary device.

Meanwhile, the command assembly unit is combined in order so as to activate the control commands in accordance with situations, which commands are used so as to control the functions of each auxiliary device corresponding to a security device installed for the securities of a barbed wire fence or a building.

### ADVANTAGEOUS EFFECTS

According to the present invention, there are provided a main device such as a smart phone or an ipad, and one or a plurality of auxiliary devices which are connected to the main device by way of a wired or wireless communication. In the main device, there is provided a command assembly unit which combines control commands for controlling the functions that the main device or auxiliary device performs, so it is possible to easily control each device by controlling the main device or the auxiliary device with the aid of the command assembly unit.

The present invention is characterized in that the command assembly unit provided in the main device combines commands used to control the functions that the main device or auxiliary device performs. The command assembly unit is configured to control a special purpose by controlling the sequences of performing each function, for example, to control the operation of a plurality of smart pads or toys using a command assembly unit which consists of an application or a program of a smart device, so it is possible to provide kids with reality-like stories or help a plurality of kids study.

In the present invention, when each auxiliary device or main device is controlled, a control command may be transmitted from the main device to each auxiliary device or another main device or the command assembly unit may be provided in the main device as well as in the auxiliary device, so a control command may be directly transmitted from the auxiliary device or main device that has performed the current control command to a device which will perform the next control command, which makes it possible to easily control each device.

### BRIEF DESCRIPTION OF THE DRAWINGS

The present invention will become better understood with reference to the accompanying drawings which are given only by way of illustration and thus are not limitative of the present invention, wherein;
Figure 1 is a block diagram illustrating a conventional control device;
Figure 2 is a flow chart illustrating the operations of a conventional control device;
Figure 3 is a conceptual view illustrating a device control method according to the present invention;
Figure 4 is a block diagram illustrating a device control method according to the present invention;
Figure 5 is a conceptual view illustrating a command assembly unit of a device control method according to the present invention; and
Figure 6 is a block diagram illustrating a device control method according to another exemplary embodiment of the present invention.

### MODES FOR CARRYING OUT THE INVENTION

The exemplary embodiments of the present invention will be described with reference to the accompanying drawings. The same elements will be given the same reference numbers. The descriptions on the same elements will be omitted. It is understood that the present invention may be implemented in multiple forms and may not be limited to the described embodiments.

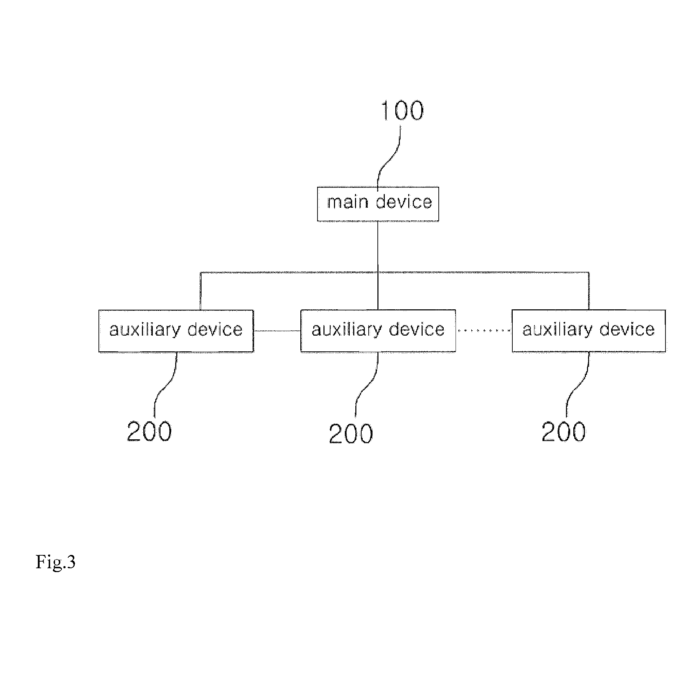

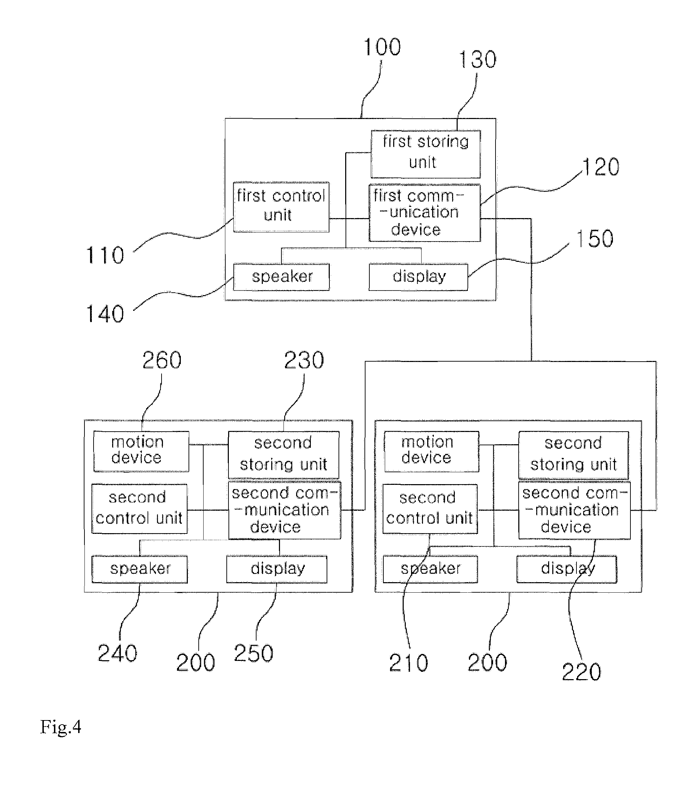

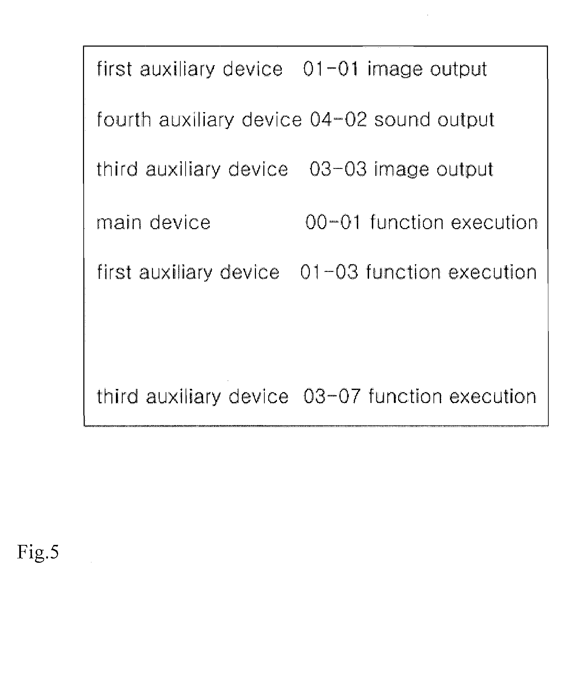

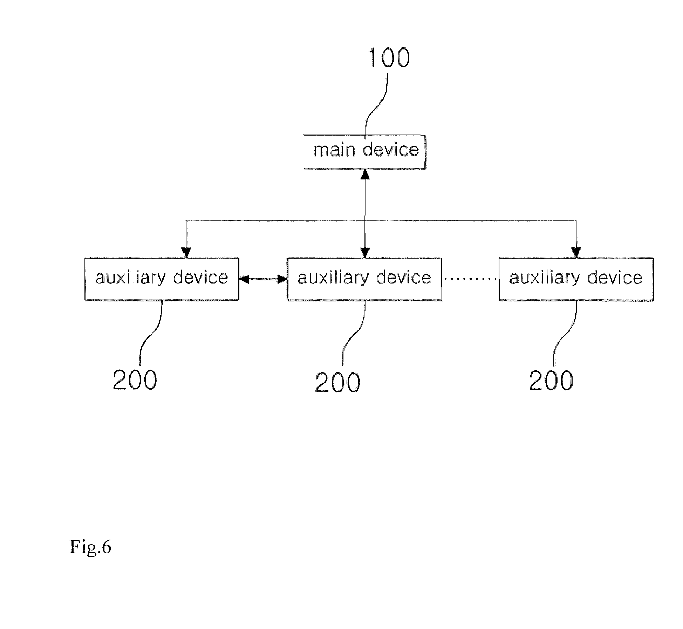

Figure 3 is a conceptual view illustrating a device control method according to the present invention. Figure 4 is a block diagram illustrating a device control method according to the present invention. Figure 5 is a conceptual view illustrating a command assembly unit of a device control method according to the present invention. Figure 6 is a block diagram illustrating a device control method according to another exemplary embodiment of the present invention.

The present invention is directed to a device control method for controlling a main device 100 and one or a plurality of auxiliary devices 200 which are connected to the main device 100 by way of a wired or wireless communication.

As illustrated in Figure 3 to 5, the main device 100 includes a command assembly unit for combining control commands used to control the functions that the main device 100 or the auxiliary device 200 performs. The main device 100 and the auxiliary device 200 are controlled by way of the command assembly unit.

Here, the main device 100 may be an existing device such as a smart phone, a smart pad, an ipad, etc. or may be exclusively manufactured. The main device 100 comprises a first control unit 110 configured to control the whole operations of the main device 100, a first communication unit 120 configured to communicate with each auxiliary device 20, and a first storing unit 130 configured to store the command assembly unit.

At this time, the command assembly unit may be stored in a software form in the first storing unit 130 provided in the main device 100 or may be installed in the main device 100 by making it in a form of an IC chip containing a logic circuit.

The main device 100 may not be simply used only as a control device which is configured to control the auxiliary device 200. When a smart phone or a smart pad is used as the main device 100, the functions of the main device 100 may be controlled by a control command.

The main device 100 may comprise a speaker 140 for outputting sounds and a display unit 50 for displaying a predetermined screen so as to perform a predetermined function.

The auxiliary device 200 comprises a second control unit 210 for controlling the whole operations of the auxiliary device 200 and a second communication device 220 for communicating with the first communication device 20 of the main device 100 by way of a wired or wireless communication.

In the auxiliary device 200, there may be further provided a speaker 240 for outputting sounds so as to perform functions, and a display unit 250 for displaying a screen. There may be still further provided a motion device 260 which performs a predetermined motion depending on the kinds of the auxiliary device 200.

The command assembly unit is configured to perform a special purpose by combining the control command used to control the functions of the main device 100 or the auxiliary device 200.

For example, conversations, behavior, etc. may be formed in a motion picture file or a sound file depending on the role of a character appearing in a story so as to provide kids with more natural or interesting stories. The surrounding situation may be formed in a motion picture file or a sound file, so the control command may cause the motion picture file or the sound file to be played.

Here, the main device 100 and the auxiliary device 200 have functions of performing the roles of specific characters. The main device 100 and the auxiliary device 200 store the motion picture files and the sound files corresponding to the characters. The command assembly unit provided in the main device 100 may be configured by combining in order the control commands used to execute each motion picture file and sound file in accordance with the flow of story.

Therefore, when the main device 100 executes the command assembly unit, the main device 100 or the auxiliary device 20 which has the functions of performing the roles of each character executes the motion picture file or the sound file in accordance with the flow of story, so kids may better concentrate on the story.

The control command belonging to the command assembly unit includes an identification code used to distinguish the main device 100 or the auxiliary device 200 that executes the control commands and a function code used to distinguish a predetermined function that each device performs, thus accurately performing a corresponding control command.

At this time, a predetermined auxiliary device 200 may not include a function code in case that all the functions should be performed at a time even when there are one function or a plurality of functions. A corresponding control command may be executed by transmitting only the identification code.

The control command may further include an execution time for limiting time for executing functions in case that the function performed by each device is not temporal but is a function that is continuously performed.

The functions that the main device 100 or the auxiliary device 200 should perform may be a specific motion in case of an animal-shaped toy. In case of a smart phone or a smart pad, a function of performing an additionally installed program or application may be included.

The functions defined in the function code included in the control command may include a function obtained by combining the functions that any of the main device 100 or the auxiliary device 200 may perform, thus easily controlling each device.

The application or program installed in the main device 100 or the auxiliary device 200 may be executed. When it needs to receive a user's selection or input so as to achieve a predetermined purpose, the main device 100 or the auxiliary device 200 may be configured to receive a user's selection or input using the above mentioned program or application. The control command which will be executed next time may change in accordance with the thusly inputted selection or input.

In case that a story is formed of the command assembly unit, and a character of the story selects, it is selected in accordance with a user's selection, and the proceeding or result of the story may change in accordance with the selected contents, so kids may learn lessen with respect to such a selection.

When the main device 100 controls by way of the command assembly unit, in case that the device which is supposed to perform the control command is the auxiliary device 200, a control command is transmitted to the auxiliary device 200 by way of a wired or wireless communication, so the auxiliary device 200 performs a function included in a corresponding control command. In case that the device which is supposed to perform a control command is the main device 100, the main device 100 directly performs the function of a corresponding control command.

As illustrated in Figure 6, according to another exemplary embodiment of the present invention, the main device 100 and the auxiliary device 200 are connected by way of a wired or wireless communication. When a control command which forms a command assembly unit is transmitted to a corresponding device, the main device 100 does not directly transmit a control command to each device, more specifically, it transmits only a first control command to a corresponding device, and the next control command is transmitted from the device which has performed a corresponding control command to a device which is supposed to perform the next control command.

At this time, the auxiliary device 200 is equipped with the command assembly unit which has been provided in the main device 100 for thereby distinguishing the control command which will be performed next, and it is possible to distinguish the device which is supposed to perform a corresponding control command, so the control command is directly transmitted to a corresponding device.

Since the remaining constructions are same as the earlier described constructions, so the descriptions thereof will be omitted.

The command assembly unit belonging to the present invention may be formed by combining the control commands used to perform the functions of each auxiliary device formed of a security device installed at a barbed-wire fence installed a border or a place to be protected or installed at a building for security.

Here, the security device is formed of a CCTV, a variety of sensors, an alarming device, a light, etc. Each security device may be an auxiliary device 200 of the present invention, and the main device 100 installed to control the auxiliary device 200 is a central control device installed in a control room or an emergency room. The central control device is configured to properly control under a specific situation the control commands used to control the functions that each auxiliary device 200 performs.

Therefore, with the aid of a command assembly unit installed in a central control device in consideration of the situations in a control room or an emergency room, a manager may properly control an operative cycle or method of each security device or a sensing range in case that an intrusion occurs or a surrounding environment becomes bad.

In the site, there is an auxiliary device 200 formed of an input device that a staff of the site may input with. It is obvious that the control commands to be executed next in accordance with the selection of a staff of the site in consideration of the situation of the site.

The remaining detailed construction are same, so the descriptions thereof will be omitted.

The device control method according to the present invention may be applied to a home automation system. The auxiliary device 20 consisting of a boiler, a heating and cooling device, a light, a TV, an audio system, a door lock, an interphone, etc. which are all installed in a house may be integrally controlled by way of a command assembly body provided in the main device 100 which consists of a central control device.

The command assembly unit is formed by combining the functions of each auxiliary device 200 and may be configured to integrally execute the controls of turning on a TV when it becomes a set time in case that a user leaves a house for long time due to holidays or business trip, turning on an audio system, turning on a light at the time of sunset, and activating a TV or audio system. It is possible to effectively prevent thief in such a way to enable an audio system or a television to output sound loud when a motion detection sensor detects a predetermined motion installed at a door with the aid of the command assembly unit even though a special security device is not installed.

At this time, the user may directly configure the command assembly unit by combining or adding the control commands used to control the functions that the main device 100 or the auxiliary device 200 performs.

If only a weaker or elderly who suffers activating a heating and cooling device, a boiler, etc. is in the house, the user may distantly activate the heating device or the cooling device by executing the command assembly unit which is formed by combining the control commands used to control the functions of the auxiliary device 200 such as the heating and cooling device or the boiler which operates in cooperation with the home automation system for thereby activating the heating device or the cooling device. At this time, the auxiliary device 200 that the weaker or elderly holds may be configured for the weaker or elderly to easily select temperature, wind direction, wind speed, etc., so the auxiliary device 200 may be efficiently operated in accordance with the selection of the weaker or elderly.

The remaining constructions are same as the earlier described construction, so the descriptions thereof will be omitted.

As the present invention may be embodied in several forms without departing from the spirit or essential characteristics thereof, it should also be understood that the above-described examples are not limited by any of the details of the foregoing description, unless otherwise specified, but rather should be construed broadly within its spirit and scope as defined in the appended claims, and therefore all changes and modifications that fall within the meets and bounds of the claims, or equivalences of such meets and bounds are therefore intended to be embraced by the appended claims.

### INDUSTRIAL APPLICABILITY

The present invention is directed to a device control method. Particularly, the present invention is directed to a device control method which makes it possible to more easily control a variety of devices in such a way to combine a variety of control commands provided to control the functions of each device for thereby controlling such devices.

More specifically, with the present invention, it is possible to develop contents using as components the functions of toys and the functions of a device such as a smart pad, so reality-like stories can be provided to kids. The developed stories may include common stories as well as a variety of situations, more specifically, the situations where kids walk across the crosswalk may be shown to kids by way of a variety of expression means in the forms of image, sound or motion of toys, by means of which the kids may correctly learn the behaviors that the kids should keep when walking across the crosswalk. The kids may have strong interests in the education, edutainment or game fields with the aid of the developed contents, thus enhancing educational effects.

## Claims

1. A device control method configured to control a main device and one or a plurality of auxiliary devices connected to the main device by way of a wired or wireless communication, comprising:
preparing a command assembly unit in the main device in such a way to combine a plurality of control commands used to control the functions that the main device or auxiliary device perform; and
controlling the main device or the auxiliary device by way of the command assembly unit.

2. The method of claim 1, wherein the control command contains an identification code for distinguishing the main device or the auxiliary device.

3. The method of claim 1, wherein the control command contains a function code for distinguishing the functions that the main device or the auxiliary device may perform.

4. The method of claim 3, wherein the function of the main device or the auxiliary device which may be performed in accordance with the control command contains a function of a program or an application installed in the main device or the auxiliary device.

5. The method of claim 3, wherein the control command further contains a proceeding time of the functions.

6. The method of claim 3, wherein the function defined in the function code contains a combined function which has combined the functions that the main device or one auxiliary device may perform.

7. The method of claim 1, wherein the main device or the auxiliary device is **characterized in that** during the execution of the function of the control command, when there is a user's selection or input, the control command to be executed next is specified in accordance with the selection that the user inputs or the user's input.

8. The method of claim 1, wherein when controlling the main device or the auxiliary device by way of the command assembly unit, the main device directly transmits by way of a wired or wireless communication a control command to the auxiliary device in case that the device supposed to execute the control command is an auxiliary device, and in case that the device supposed to execute the control command is the main device, the main device directly executes a corresponding control command.

9. The method of claim 1, wherein the auxiliary device further comprises a command assembly unit.

10. The method of claim 9, wherein when controlling the main device or the auxiliary device by way of the command assembly unit, the main device or the auxiliary device transmits by way of a wired or wireless communication a control command to the main device or the auxiliary device which is supposed to execute the next control command in the command assembly unit provided inside, after a corresponding control command is executed.

11. The method of claim 1, wherein the command assembly unit is configured to arrange a story using at least one among a plurality of motion pictures, sound, program and a function of a main device or an auxiliary device and is configured to combine in order the control commands used to perform each motion picture, sound or program.

12. The method of claim 11, wherein a motion picture, sound and program used to execute the control commands of the command assembly unit are stored in the main device and the auxiliary device.
